# FASCICULE DE BREVET EUROPEEN

(11) **EP 1 848 625 B1**
(45) Date de publication et mention de la délivrance du brevet: **10.12.2008**
(21) Numéro de dépôt: 05802494.4
(22) Date de dépôt: 16.09.2005
(51) Int. Cl.: B62D 6/10

(54) **PROCÉDÉ DE CORRECTION DES MESURES DU COUPLE EXERCÉ SUR UN VOLANT DE CONDUITE D'UNE DIRECTION ASSISTÉE ÉLECTRIQUE DE VÉHICULE AUTOMOBILE**
VERFAHREN ZUR MASSKORREKTUR DES AUF EIN ELEKTRONISCH GESTÜTZTES LENKRAD EINES KRAFTFAHRZEUGS AUSGEÜBTEN DREHMOMENTS
METHOD FOR CORRECTING MEASURES OF TORQUE EXERTED UPON AN ELECTRONICALLY ASSISTED STEERING WHEEL OF A MOTOR VEHICLE

(30) Priorité: 26.10.2004 FR 0411398
(43) Date de publication de la demande: 31.10.2007
(73) Titulaire: Koyo Steering Europe (K.S.E.), 69540 Irigny (FR)
(72) Inventeur: KASBARIAN, Jean-Marc, F-69007 Lyon (FR); RAVIER, Christophe, 69780 St Pierre de Chandieu (FR)
(74) Mandataire: Bratel, Gérard
(86) Numéro de dépôt international: PCT/FR2005/002296
(87) Numéro de publication internationale: WO 2006/045910

(56) Documents cités:
- EP-A- 0 546 789
- EP-A- 1 184 258
- EP-A- 1 378 420

## Description

La présente invention concerne, de façon générale, les véhicules automobiles équipés d'une direction assistée électrique. Plus particulièrement, cette invention s'intéresse à un procédé de correction des mesures du couple exercé sur un volant de conduite d'une direction assistée électrique de véhicule automobile.

De manière généralement connue, une direction assistée électrique de véhicule automobile comprend un moteur électrique d'assistance, à deux sens de rotation, dont l'arbre de sortie est habituellement accouplé, par l'intermédiaire d'un réducteur de vitesse par exemple à vis sans fin et roue tangente, à la colonne de direction du véhicule, de manière à transmettre un couple moteur (éventuellement aussi un couple résistant) à cette colonne de direction. Le couple d'assistance est lui-même communiqué, par l'intermédiaire de la partie mécanique de la direction généralement du type à pignon et crémaillère, aux deux roues directrices du véhicule concerné, de manière à les orienter en vue d'un braquage à droite ou à gauche, ou d'un redressement. On connaît aussi des directions assistées électriques avec système d'assistance agissant sur la crémaillère ; dans de tels systèmes, le moteur électrique d'assistance est accouplé, par exemple, à un réducteur du type vis à billes qui transmet l'effort d'assistance directement à la crémaillère.

Le moteur électrique d'assistance est piloté par un calculateur électronique embarqué, qui reçoit divers signaux d'entrée et qui les traite, de manière à commander de manière optimisée, à chaque instant, le moteur électrique d'assistance. Les grandeurs d'entrée ainsi exploitées dans le calculateur, pour la régulation de la direction assistée électrique, sont en particulier la position angulaire instantanée du volant de conduite du véhicule, et/ou du moteur électrique d'assistance, le couple exercé par le conducteur sur le volant, et la vitesse instantanée du véhicule. Le calculateur peut aussi exploiter d'autres paramètres, déduits par un calcul, par exemple la vitesse de rotation du volant obtenue en tant que dérivée, par rapport au temps, de l'angle du volant.

En ce qui concerne plus particulièrement le couple exercé par le conducteur sur le volant, la mesure de couple est habituellement réalisée, lorsque le véhicule circule, par un capteur de couple qui reste complexe à mettre en oeuvre et à étalonner, ce capteur étant en général disposé sur la colonne de direction. L'information fournie par un tel capteur est traitée par le calculateur embarqué, pour déterminer la consigne de couple que le moteur électrique d'assistance doit appliquer au cours d'un virage.

Le document EP 1 378 420 décrit une direction assistée électrique selon le préambule de la revendication 1.

Or, on constate que les conditions de fonctionnement, par exemple des conditions de température, peuvent affecter le capteur de couple au volant et conduire à une dérive, temporaire ou permanente, sur la consigne de couple d'assistance introduite par le calculateur embarqué pour le pilotage de la fonction d'assistance.

La présente invention vise à éliminer cet inconvénient, en fournissant un procédé de correction en temps réel des mesures du couple au volant de conduite d'une direction assistée électrique de véhicule automobile qui garantisse une fonction d'assistance sans dérive, c'est-à-dire symétrique entre braquages à droite et à gauche.

A cet effet, l'invention a pour objet un procédé de correction des mesures du couple exercé sur un volant de conduite d'une direction assistée électrique de véhicule automobile, réalisées, lorsque le véhicule circule, par un capteur de couple disposé sur la colonne de direction, la direction comprenant un moteur électrique d'assistance piloté par un calculateur électronique embarqué, notamment à partir des mesures du couple au volant réalisées par le capteur de couple, le procédé consistant, lorsque la vitesse instantanée du véhicule est supérieure à une vitesse de seuil prédéterminée :
- à identifier que, pendant une durée minimale prédéterminée, le véhicule circule en ligne droite, sans couple exercé sur le volant par le conducteur du véhicule ;
- si la condition précédente est remplie, à déterminer un couple résiduel moyen au volant, notamment par le calcul d'une moyenne glissante des mesures du couple au volant ;
- si le couple résiduel moyen au volant est supérieur à un couple résiduel minimal prédéterminé, à déterminer par calcul une correction, en particulier proportionnelle à ce couple résiduel moyen, par exemple une correction linéaire, à appliquer sur les mesures du couple au volant ;
- à appliquer une correction effective, limitée notamment en vitesse de variation et en amplitude par rapport à la correction déterminée par calcul, sur les mesures du couple au volant, les mesures corrigées étant ensuite traitées par le calculateur électronique pour piloter le moteur électrique d'assistance.

L'idée inventive consiste ainsi à réaliser une auto-calibration continue du "point zéro" du capteur de couple au volant lorsque le véhicule circule en ligne droite. Le procédé selon l'invention permet, de manière simple et sans modifier les moyens de mesure existants, de compenser une éventuelle dérive sur les mesures du couple au volant, et d'assurer ainsi une bonne tenue de cap du véhicule, en particulier à haute vitesse, y compris sur une route en dévers.

Selon une possibilité, le véhicule est identifié comme circulant en ligne droite, sans couple exercé sur le volant par le conducteur du véhicule, si la vitesse angulaire du moteur électrique d'assistance est inférieure à une vitesse limite prédéterminée, et/ou si la vitesse de rotation du volant est inférieure à une vitesse angulaire limite prédéterminée, et/ou si les mesures corrigées du couple au volant sont inférieures à un couple limite prédéterminé.

Le cas échéant, la moyenne glissante des mesures du couple au volant est avantageusement réinitialisée à la valeur "zéro" à chaque démarrage du véhicule.

L'invention sera de toute façon mieux comprise à l'aide de la description qui suit, en référence au dessin schématique annexé illustrant, à titre d'exemple, un mode de mise en oeuvre de ce procédé de correction des mesures du couple au volant.

La figure 1 est une vue en perspective, schématisée, d'une direction assistée électrique pouvant mettre en oeuvre le procédé de l'invention.

La figure 2 est un schéma-bloc qui illustre le procédé complet.

La figure 3 est un graphique représentant une courbe de la correction effective à appliquer en fonction du couple résiduel moyen au volant.

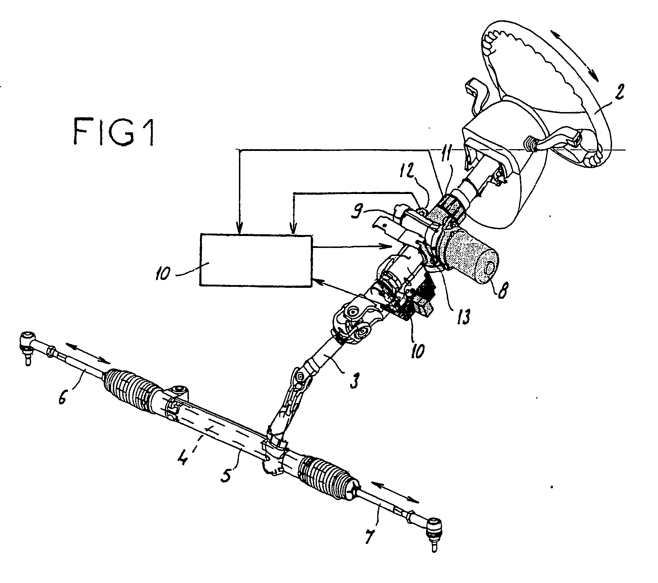

La figure 1 rappelle quels sont les principaux éléments composant un système de direction assistée électrique. Une telle direction comprend, d'une part, une partie mécanique comprenant un volant de conduite 2 lié en rotation à une colonne de direction, 3, dont l'extrémité éloignée du volant 2 porte un pignon de direction en prise avec une crémaillère 4, montée coulissante dans un carter de direction 5. Les deux extrémités opposées de la crémaillère 4 sont respectivement liées, par l'intermédiaire de biellettes 6 et 7, aux roues directrices droite et gauche (non représentées) du véhicule automobile concerné.

La direction comprend, pour assister l'effort manuel exercé par le conducteur du véhicule sur le volant 2, un moteur électrique d'assistance 8 à deux sens de rotation, dont l'arbre de sortie est accouplé, par l'intermédiaire d'un réducteur de vitesse 9 notamment à vis sans fin et roue tangente, à la colonne de direction 3, de manière à transmettre un couple moteur (éventuellement aussi un couple résistant) à cette colonne de direction 3. Le moteur électrique d'assistance 8 est piloté par un calculateur électronique embarqué 10, qui reçoit et traite divers signaux, en provenance de capteurs. Dans une réalisation habituelle, le calculateur électronique 10 reçoit un signal électrique issu d'un capteur 11 de l'angle du volant 2, représentatif de l'angle instantané de braquage du véhicule automobile concerné, et ce calculateur 10 reçoit aussi un signal issu d'un capteur de couple 12 placé sur la colonne de direction 3, et mesurant ainsi le couple exercé par le conducteur sur le volant 2. Dans l'exemple illustré, il est encore prévu un capteur 13 de la position instantanée du moteur électrique d'assistance 8. A partir de ces diverses informations, et éventuellement de paramètres extérieurs à la direction, tels que la vitesse du véhicule, le calculateur électronique 10 pilote le moteur électrique d'assistance 8, en définissant à tout moment un couple ou un effort d'assistance, pouvant amplifier ou au contraire compenser l'effort appliqué par le conducteur sur le volant 2, selon des "lois d'assistance" prédéfinies.

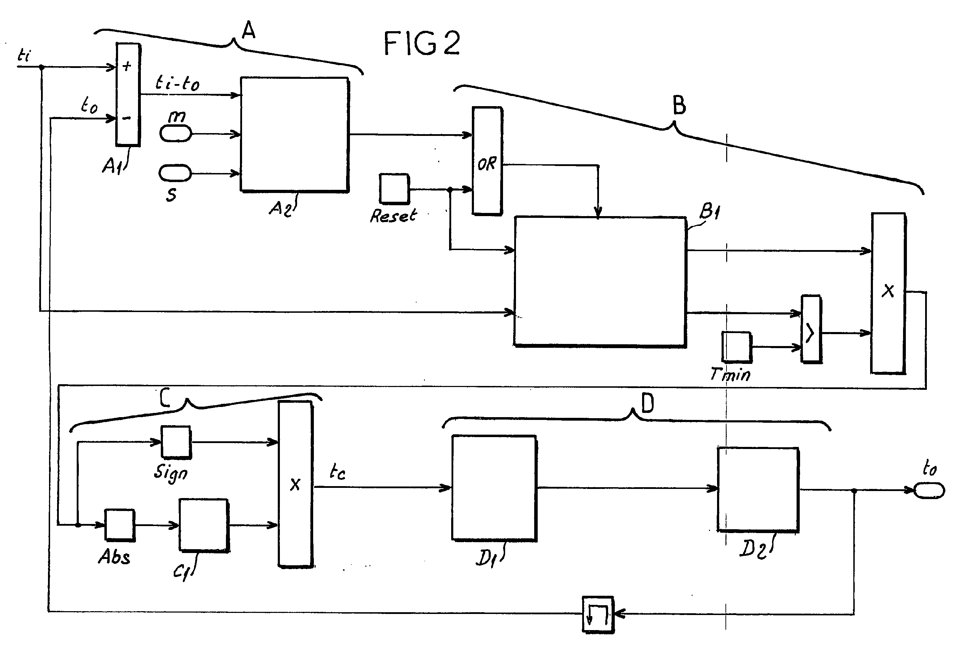

L'invention s'intéresse plus particulièrement au traitement du signal fourni par le capteur de couple 12. La figure 2 représente un schéma-bloc d'un mode de mise en oeuvre du procédé de correction selon l'invention. Une définition des blocs A, B, C et D de ce schéma est donnée ci-après.

Au niveau d'un premier sous-ensemble A1 du bloc A, les mesures tᵢ du capteur de couple 12 sont corrigées d'une valeur tₒ de correction des mesures du couple au volant 2, établie par le procédé selon l'invention.

Un second sous-ensemble A2 du bloc A vérifie que, pendant une durée minimale prédéterminée, par exemple une seconde :
- les mesures corrigées (tᵢ - tₒ) du couple au volant 2 sont inférieures à un couple limite prédéterminé, par exemple 0,5 Nm ;
- la vitesse angulaire m du moteur électrique d'assistance 8 est inférieure à une vitesse limite prédéterminée, par exemple 50 tours/minute ;
- la vitesse instantanée s du véhicule est supérieure à une vitesse de seuil prédéterminée, par exemple 20 km/h, c'est-à-dire hors conditions de "parking".

Les conditions requises pour détecter une circulation en ligne droite, et hors conditions de "parking", sont bien entendu à adapter pour chaque véhicule. Si ces conditions sont remplies, il est alors possible de déterminer une éventuelle dérive des mesures du couple au volant 2. A cet effet, un deuxième bloc B détermine un couple résiduel moyen tₘ au volant, notamment par le calcul B1 d'une moyenne glissante sur les mesures tᵢ du capteur 12. Il est à noter que la moyenne glissante des mesures du couple au volant est réinitialisée ("reset") à la valeur "zéro" à chaque démarrage du véhicule.

Après une période d'acquisition Tₘᵢₙ prédéterminée, par exemple 5 secondes, le couple résiduel moyen tₘ ainsi calculé est transmis à un bloc C. Le bloc C vérifie que le couple résiduel moyen tₘ ainsi calculé est supérieur à un couple résiduel minimal prédéterminé, par exemple 0,2 Nm (en valeur absolue), puis il calcule, à partir d'une table de correction C1, une correction t_{c}, proportionnelle à ce couple résiduel moyen tₘ, à appliquer sur les mesures du capteur de couple 12.

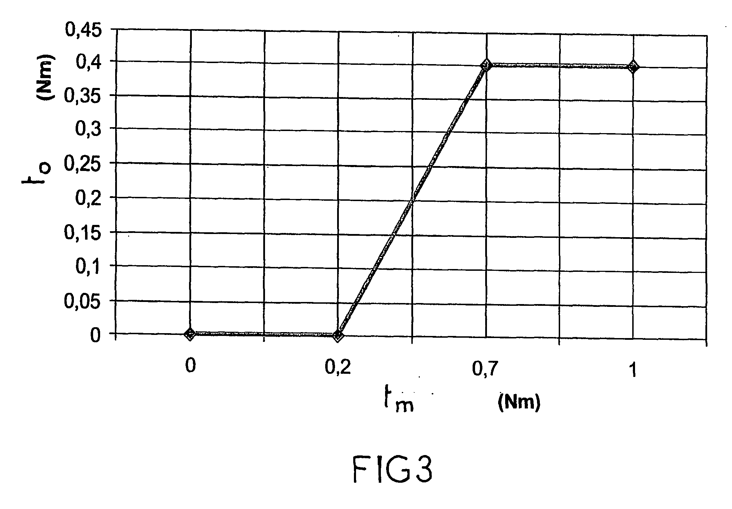

Enfin, au niveau d'un bloc D, une correction effective tₒ (voir figure 3), limitée en vitesse de variation et en amplitude par rapport à la correction calculée t_{c}, est appliquée sur les mesures tᵢ du couple au volant, avant qu'elles ne soient traitées par le calculateur 10.

Pour éviter un "effet de seuil" dans le ressenti au volant, une limitation D1 de la vitesse de variation de la correction effective tₒ est prévue afin de garder cette vitesse de variation toujours inférieure à une vitesse maximale prédéterminée, par exemple 0,025 Nm/s. En outre, dans un souci de sécurité et de fiabilité du procédé, une limitation D2 de l'amplitude de la correction effective tₒ est prévue pour garder cette amplitude toujours inférieure à une amplitude maximale prédéterminée, par exemple 0,4 Nm (voir figure 3).

Comme il va de soi, l'invention ne se limite pas au seul mode de mise en oeuvre de ce procédé de correction qui a été décrit ci-dessus, à titre d'exemple ; elle en embrasse, au contraire, toutes les variantes de réalisation et d'application respectant le même principe, dans le cadre des revendications annexées.

## Revendications

1. Procédé de correction des mesures du couple exercé sur un volant de conduite (2) d'une direction assistée électrique de véhicule automobile, réalisées, lorsque le véhicule circule, par un capteur de couple (12) disposé sur la colonne de direction (3), la direction comprenant un moteur électrique d'assistance (8) piloté par un calculateur électronique (10) embarqué, notamment à partir des mesures (tᵢ) du couple au volant (2) réalisées par le capteur de couple (12), **caractérisé en ce qu'**il consiste, lorsque la vitesse instantanée (s) du véhicule est supérieure à une vitesse de seuil prédéterminée :
- à identifier que, pendant une durée minimale prédéterminée, le véhicule circule en ligne droite, sans couple exercé sur le volant (2) par le conducteur du véhicule ;
- si la condition précédente est remplie, à déterminer un couple résiduel moyen au volant (2), notamment par le calcul (B1) d'une moyenne glissante des mesures (tᵢ) du couple au volant (2) ;
- si le couple résiduel moyen (tₘ) au volant (2) est supérieur à un couple résiduel minimal prédéterminé, à déterminer par calcul une correction (t_{c}), en particulier proportionnelle à ce couple résiduel moyen (tₘ), par exemple une correction linéaire, à appliquer sur les mesures (tᵢ) du couple au volant (2) ;
- à appliquer une correction effective (tₒ), limitée notamment en vitesse de variation (D1) et en amplitude (D2) par rapport à la correction déterminée par calcul (t_{c}), sur les mesures (tᵢ) du couple au volant (2), les mesures corrigées (tᵢ - tₒ) étant ensuite traitées par le calculateur électronique (10) pour piloter le moteur électrique d'assistance (8).

2. Procédé de correction selon la revendication 1, **caractérisé en ce que** le véhicule est identifié comme circulant en ligne droite, sans couple exercé sur le volant (2) par le conducteur du véhicule, si la vitesse angulaire (m) du moteur électrique d'assistance (8) est inférieure à une vitesse limite prédéterminée, et/ou si la vitesse de rotation du volant (2) est inférieure à une vitesse limite prédéterminée, et/ou si les mesures corrigées (tᵢ - tₒ) du couple au volant (2) sont inférieures à un couple limite prédéterminé.

3. Procédé de correction selon la revendication 1 ou 2, **caractérisé en ce que** la moyenne glissante (B1) des mesures (tᵢ) du couple au volant (2) est réinitialisée à la valeur "zéro" à chaque démarrage du véhicule.

## Claims

1. Method for correcting the measurements of the torque exerted on a steering wheel (2) of an automobile vehicle electric power-assisted steering, carried out, when the vehicle is being driven, by a torque sensor (12) disposed on the steering column (3), the steering system comprising an assistance electric motor (8) controlled by an on-board electronic processor (10), notably using the measurements (tᵢ) of the torque on the steering wheel (2) carried out by the torque sensor (12), **characterized in that** it consists, when the instantaneous speed (s) of the vehicle is higher than a predetermined threshold speed:
- in identifying that, during a predetermined minimum period of time, the vehicle is being driven in a straight line, without torque exerted on the steering wheel (2) by the driver of the vehicle;
- if the preceding condition is met, in determining a mean residual torque on the steering wheel (2), notably by the calculation (B1) of a moving average of the measurements (tᵢ) of the torque on the steering wheel (2);
- if the mean residual torque (tₘ) on the steering wheel (2) is higher than a predetermined minimum residual torque, in determining by calculation a correction (t_{c}), in particular proportional to this mean residual torque (tₘ), for example a linear correction, to be applied to the measurements (tᵢ) of the torque on the steering wheel (2);
- in applying an effective correction (t₀), limited notably in speed of variation (D1) and in amplitude (D2) with respect to the correction determined by calculation (t_{c}), to the measurements (tᵢ) of the torque on the steering wheel (2), the corrected measurements (tᵢ - to) then being processed by the electronic processor (10) in order to control the assistance electric motor (8).

2. Correction method according to Claim 1, **characterized in that** the vehicle is identified as being driven in a straight line, without torque exerted on the steering wheel (2) by the driver of the vehicle, if the angular speed (m) of the assistance electric motor (8) is lower than a pre-determined limiting speed, and/or if the rotation speed of the steering wheel (2) is lower than a pre-determined limiting speed, and/or if the corrected measurements (tᵢ - to) of the torque on the steering wheel (2) are lower than a predetermined limiting torque.

3. Correction method according to either of Claims 1 and 2, **characterized in that** the moving average (B1) of the measurements (tᵢ) of the torque on the steering wheel (2) is reset to the value "zero" whenever the vehicle is started.

## Patentansprüche

1. Verfahren zur Korrektur der Messungen des auf ein Lenkrad (2) einer elektrischen Servolenkung eines Kraftfahrzeugs ausgeübten Drehmoments, die beim Fahren des Fahrzeugs von einem auf der Lenksäule (3) angeordneten Drehmomentsensor (12) durchgeführt werden, wobei die Lenkung einen elektrischen Servomotor (8) aufweist, der von einem an Bord befindlichen elektronischen Rechner (10) gesteuert wird, insbesondere ausgehend von den Messungen (tᵢ) des Drehmoments des Lenkrads (2), die vom Drehmomentsensor (12) durchgeführt werden, **dadurch gekennzeichnet, dass** es, wenn die Augenblicksgeschwindigkeit (s) des Fahrzeugs über einer vorbestimmten Schwellengeschwindigkeit liegt, darin besteht:
- festzustellen, dass das Fahrzeug während einer vorbestimmten Mindestdauer geradeaus fährt, ohne ein vom Fahrer des Fahrzeugs auf das Lenkrad (2) ausgeübtes Drehmoment;
- wenn die obige Bedingung erfüllt ist, ein mittleres Restmoment am Lenkrad (2) zu bestimmen, insbesondere durch die Berechnung (B1) eines gleitenden Mittelwerts der Messungen (tᵢ) des Drehmoments am Lenkrad (2);
- wenn das mittlere Restmoment (tₘ) am Lenkrad (2) höher als ein vorbestimmtes Mindestrestmoment ist, durch Berechnung eine Korrektur (t_{c}) zu bestimmen, insbesondere proportional zu diesem mittleren Restmoment (tₘ), zum Beispiel eine lineare Korrektur, die an die Messungen (tᵢ) des Drehmoments am Lenkrad (2) anzuwenden ist;
- eine effektive Korrektur (tₒ), die insbesondere in der Änderungsgeschwindigkeit (D1) und der Amplitude (D2) bezüglich der durch Berechnung (t_{c}) bestimmten Korrektur begrenzt ist, an die Messungen (tᵢ) des Drehmoments am Lenkrad (2) anzuwenden, wobei die korrigierten Messungen (tᵢ - tₒ) anschließend von dem elektronischen Rechner (10) verarbeitet werden, um den elektrischen Servomotor (8) zu steuern.

2. Korrekturverfahren nach Anspruch 1, **dadurch gekennzeichnet, dass** das Fahrzeug als geradeaus fahrend festgestellt wird, ohne ein durch den Fahrer des Fahrzeugs auf das Lenkrad (2) ausgeübtes Drehmoment, wenn die Winkelgeschwindigkeit (m) des elektrischen Servomotors (8) unter einer vorbestimmten Grenzgeschwindigkeit liegt, und/oder wenn die Drehgeschwindigkeit des Lenkrads (2) unter einer vorbestimmten Grenzgeschwindigkeit liegt, und/oder wenn die korrigierten Messungen (tᵢ - tₒ) des Drehmoments des Lenkrads (2) unter einem vorbestimmten Grenzmoment liegen.

3. Korrekturverfahren nach Anspruch 1 oder 2, **dadurch gekennzeichnet, dass** der gleitende Mittelwert (B1) der Messungen (tᵢ) des Drehmoments am Lenkrad (2) bei jedem Start des Fahrzeugs auf den Wert "Null" zurückgesetzt wird.
